# EUROPÄISCHE PATENTSCHRIFT

(11) **EP 0 578 848 B1**
(45) Veröffentlichungstag und Bekanntmachung des Hinweises auf die Patenterteilung: **20.09.1995**
(21) Anmeldenummer: 92111997.0
(22) Anmeldetag: 14.07.1992
(51) Int. Cl.: G21C 3/33, G21C 3/334

(54) **Brennelement mit rationeller Verschraubung der Deckplatte an Rohren oder Stäben**
Fuel assembly comprising an economic screwed joint of the endplate and tubes or rods
Assemblage de combustible ayant une liaison vissée économique de la plaque terminale et des tubes ou barreaux

(43) Veröffentlichungstag der Anmeldung: 19.01.1994
(73) Patentinhaber: SIEMENS AKTIENGESELLSCHAFT, 80333 München (DE)
(72) Erfinder: Friedrich, Erhard, W-8501 Eckental (DE)

(56) Entgegenhaltungen:
- EP-A- 0 110 090
- WO-A-92/05565
- FR-A- 2 493 024
- FR-A- 2 539 548
- US-A- 4 030 975

## Beschreibung

Die Erfindung geht aus von einem Brennelement eines Druckwasser-Reaktors mit den im Oberbegriff des Anspruchs 1 angegebenen Merkmalen. Die Erfindung betrifft auch Brennelemente von Leichtwasser-Reaktoren mit den im Oberbegriff des Anspruchs 8 angegebenen Merkmalen.

Brennelemente von Druckwasser-Reaktoren enthalten eine für das Kühlmittel durchlässige Bodenplatte, eine Deckplatte mit Kühlmitteldurchlässen und ein Bündel nebeneinander liegender Brennstäbe, die sich praktisch von der Bodenplatte bis zur Deckplatte erstrecken. Mehrere der regelmäßig angeordneten Brennstabpositionen im Bündel sind nicht von Brennstäben, sondern Steuerstab-Führungsrohren besetzt, an denen die Bodenplatte und die Deckplatte befestigt sind, so daß diese Platten einen Anschlag für die Brennstäbe bilden, die durch die Maschen mehrerer an den Führungsrohren befestigter gitterförmiger Abstandhalter geführt und an den Gitterstegen der Abstandhalter abgestützt sind. Die Führungsrohre sind an der Bodenplatte befestigt, z. B. indem die Unterenden der Führungsrohre Gewindebolzen tragen, die durch Haltebohrungen der Bodenplatten geführt und von unten durch Muttern an der Bodenplatte verschraubt sind.

Die Erfindung betrifft insbesondere die Befestigung der Deckplatte an den Führungsrohren, wozu Schweißverbindungen in der Regel ungeeignet sind. Denn während die Deckplatte häufig aus austenitischem Stahl gefertigt sind, werden bei modernen Druckwasser-Reaktoren aus Gründen der Neutronen-Ökonomie in der Regel Führungsrohre aus einer Zirkoniumlegierung verwendet. Außerdem ist es für Inspektions- und Reparaturarbeiten häufig erforderlich, die Deckplatte zu entfernen und einzelne Brennstäbe aus dem Brennelement zu entnehmen. Daher sind lösbare Verbindungen angestrebt, die aber aus möglichst wenigen und gegen ein Verlieren gesicherten Bauteilen bestehen sollen.

Derartige Schraubverbindungen bestehen häufig aus jeweils einer Buchse, die am oberen Ende der Führungsrohre angesetzt (z. B. angeschweißt) ist und mit einer Hülse verschraubt wird, die in einer Haltebohrung in der Deckplatte eingesetzt und dort gesichert ist.

Bei bekannten Schraubverbindungen trägt die Buchse des Führungsrohres ein Innengewinde zum Verschrauben mit der in die Haltebohrung der Deckplatte eingesetzten Hülse und einen polygonalen Außenquerschnitt, mit dem diese Buchse in eine entsprechende polygonale Ausnehmung an der Unterseite der Deckplatte hineinragt, um die beim Verschrauben der Buchse mit der Hülse auftretenden Drehmomente aufzunehmen. Die Hülse wird mit ihrem Außengewinde so weit in das Innengewinde der Führungsrohr-Buchse eingedreht, bis ein als Anschlag ausgebildeter Rand der Hülse an der Oberseite der Deckplatte anliegt, und durch eine Verformung kann dieser Hülsenrand in ein entsprechendes Profil an der Oberseite der Deckplatte eingedrückt werden, um die Hülse gegen ein Verdrehen und ein unbeabsichtigtes Lösen zu sichern.

Die polygonalen Ausnehmungen an der Unterseite der Deckplatte sind aufwendig herzustellen und bedingen, daß die Kühlmitteldurchlässe der Deckplatte, an denen ein möglichst geringer Druckverlust auftreten soll, einen erheblichen Mindestabstand von den die Hülse tragenden Haltebohrungen aufweisen müssen.

Bei einer ähnlichen Schraubverbindung (FR-A-2 493 024) sind die Polygonalen Querschnitte von Hülse, Buchse und Ausnehmungen zwar durch Zylindrische Querschnitte ersetzt, die leichter hergestellt werden Können, jedoch müssen dann bei jeder Montage des Brennelementes die zum Verschrauben benötigten Drehmomente auf andere Weise an der Buchse aufgebracht werden und während des Reaktorbetriebes ist das Oberende des Führungsrohres nicht drehgesichert.

Außerdem sind in jedem Fall für die Länge der Führungsrohre und die polygonalen Ausnehmungen an der Unterseite der Deckplatte Fertigungstoleranzen unvermeidbar. Es kann daher der Fall auftreten, daß beim Verschrauben der Hülsen mit den Buchsen manche Führungsrohrbuchsen bis zum Anschlag an den Ausnehmungen der Deckplatte angezogen werden, während die Verschraubungen anderer Führungsrohr-Buchsen nicht bis zum Anschlag angezogen sind. Die gesamten zwischen den Führungsrohren und der Deckplatte auftretenden Kräfte werden dann nur von den wenigen, bis zum Anschlag angezogenen Verschraubungen aufgenommen, während die anderen Verschraubungen locker sitzen. Dadurch wird die Stabilität des Brennelementes vermindert und die stark belasteten Verschraubungen können brechen. Außerdem ist dabei nicht sichergestellt, daß die Deckplatte senkrecht zur Achse der Führungsrohre ausgerichtet ist.

Daher ist es bei dieser bekannten Konstruktion vorgesehen, die einzelnen Führungsrohre mit ihren Buchsen erst dann zu verschweißen, wenn die Buchsen eingedreht und die Deckplatte ausgerichtet sind. Bei diesem Verschweißen können dann individuell auftretende Abweichungen von den Normmaßen ausgeglichen werden. Jede Deckplatte ist damit individuell an das einzelne Brennelement angepaßt und bei Inspektionsarbeiten muß also stets darauf geachtet werden, daß die zu den einzelnen Brennelementen gehörenden Deckplatten nicht verwechselt werden. Darüber hinaus muß sogar darauf geachtet werden, daß stets die gleichen Hülsen der gleichen Deckplatte mit den gleichen Buchsen der Führungsrohre verschraubt werden. Dies erfordert besondere Überwachungen bei Reparaturarbeiten.

Auch für die Halterung der Führungsrohre an der Bodenplatte eines Druckwasser-Reaktors oder die Befestigung von Brennstäben (insbesondere von sogenannten "Tragstäben", die sowohl am Kopf wie am Fuß des Brennelementes verschraubt sind) und anderen Rohren wird häufig eine mechanisch stabile Verschraubung gesucht, die montagefreundlich und leicht lösbar ist, nur aus wenigen und möglichst unverlierbar gehaltenen Teilen besteht und genügend Raum für viele und/oder große Kühlmitteldurchlässe in der Deckplatte bietet.

In der Internationalen Patentanmeldung WO 92/05565 ist ein Siedewasser-Brennelement mit einer für Kühlmittel durchlässigen Endplatte am einen Ende (Kopfteil) und einer Kühlmittel-Durchlässe tragenden Deckplatte mit einer nach außen zeigenden Außenseite und einer zum Brennelement-Inneren zeigenden Innenseite beschrieben, wobei hier die beiden Platten die beiden offenen Enden eines ein Stabbündel seitlich umschließenden Brennelement-Kastens abdecken.

Das Stabbündel enthält nebeneinanderliegende Rohre, wobei die Mehrzahl der Rohre Brennstoff enthalten, also Brennstäbe sind. Wenigstens eines dieser Rohre ist an einem Ende durch eine Buchse verlängert, die an der Deckplatte gehalten ist. Dieses eine Rohr ist als Kühlmittelrohr ausgebildet, d. h. es leitet flüssiges Kühlmittel vom Fußteil in den oberen Teil des Brennelementes. Seine Buchse trägt ein Außengewinde, mit dem sie in einer Haltebohrung der Deckplatte verschraubt ist. Durch die Deckplatte und die Buchse ist ein Bolzen geführt, der nach der Montage an einem der Teile angeschweißt ist und die Verschraubung der Buchse gegen ein Verdrehen sichert.

Zum Lösen dieser Verschraubung muß der Bolzen zerstört, z. B. ausgebohrt oder durchgetrennt, werden.

Für andere Rohre, z. B. Brennstäbe, die mit einem Ende an der Deckplatte gehalten sind, sich aber nur über einen Teil des Brennelementes erstrecken ("teillange Brennstäbe"), sind Bajonettverschlüsse zur Befestigung vorgesehen.

Auch für die Befestigung solcher Kühlmittelrohre und teillangen Brennstäbe ist eine möglichst rationelle, raumsparende und stabile Verschraubung vorteilhaft, die nur von der Außenseite her durch ein geeignetes Werkzeug lösbar ist.

Der Erfindung liegt die Aufgabe zugrunde, eine bessere Verschraubung von Rohren (Brennstäben, Führungsrohren) an den Deckplatten der Brennelemente zu schaffen.

Zur Lösung dieser Aufgabe sieht die Erfindung die Merkmale des Anspruchs 1 vor.

Demnach trägt bei einem Druckwasser-Brennelement die Buchse, die das obere Ende des Führungsrohres darstellt, eine Stirnfläche, die eine ebene, an der Unterseite der Deckplatte anschlagende Anlagefläche bildet. Die Führungsrohr-Buchse ragt also im montierten Zustand nicht in eine Ausnehmung der Deckplatte hinein, sondern liegt mit dem oberen Rand der Buchse fest an der Unterseite der Deckplatte an. Allerdings ist dabei nicht erforderlich, daß der gesamte obere Rand der Buchse derart fest an der Unterseite der Deckplatte anliegt, vielmehr kann er an einer Stelle des Buchsenumfangs ein Profil aufweisen, das in ein entsprechendes Gegenprofil der Deckplatte eingreift und die Buchse gegen eine Verdrehung gegenüber der Deckplatte sichert. Die axiale Lage des Führungsrohres ist damit durch den spielfreien Anschlag der Stirnfläche an der Deckplattenunterseite fixiert, so daß axiale Kräfte gleichmäßig übertragen werden; beim Verschrauben auftretende Torsionskräfte dagegen werden durch ein geringes Spiel zwischen dem Buchsen-Profil und dem Gegenprofil der Deckplatte aufgefangen.

Ferner weist die Buchse ein Innengewinde auf, in das ein Außengewinde der durch eine Haltebohrung in der Deckplatte eingesetzten Hülse eingeschraubt ist.

Die Hülse selbst besitzt einen die Oberseite der Deckplatte übergreifenden Flansch, mit der sie an der Deckplatte gehalten ist, und einen über die Unterseite der hinausragenden Kragen, der das Außengewinde trägt. Sie ist mit diesem Außengewinde auf das Innengewinde der Buchse so weit aufgeschraubt, bis der Flansch an der Oberseite der Deckplatte anschlägt.

Ähnliche Verschraubungen können auch für die Halterung anderer Rohre an einer der Deckplatten eines Brennelementes verwendet werden.

Anhand von drei Ausführungsbeispielen und sieben Figuren wird die Erfindung näher erläutert. Es zeigen:
Figur 1 das Prinzip des erfindungsgemäßen Brennelementes, teilweise in einer Seitenansicht, teilweise im Längsschnitt;
Figur 2 einen Längsschnitt durch die Hülse und die Buchse, die zum besseren Verständnis zwar nebeneinander, aber in ihrer axialen Position zur Deckplatte dargestellt sind;
Figur 3 eine Aufsicht auf die Deckplatten-Unterseite;
Figur 4 einen Längsschnitt durch die fertige Verschraubung;
Figuren 5 und 6 die den Figuren 3 und 4 entsprechenden Darstellungen eines anderen Ausführungsbeispiels; und
Figur 7 einen an beiden Enden verschraubten Brennstab eines Siedewasser-Brennelementes.

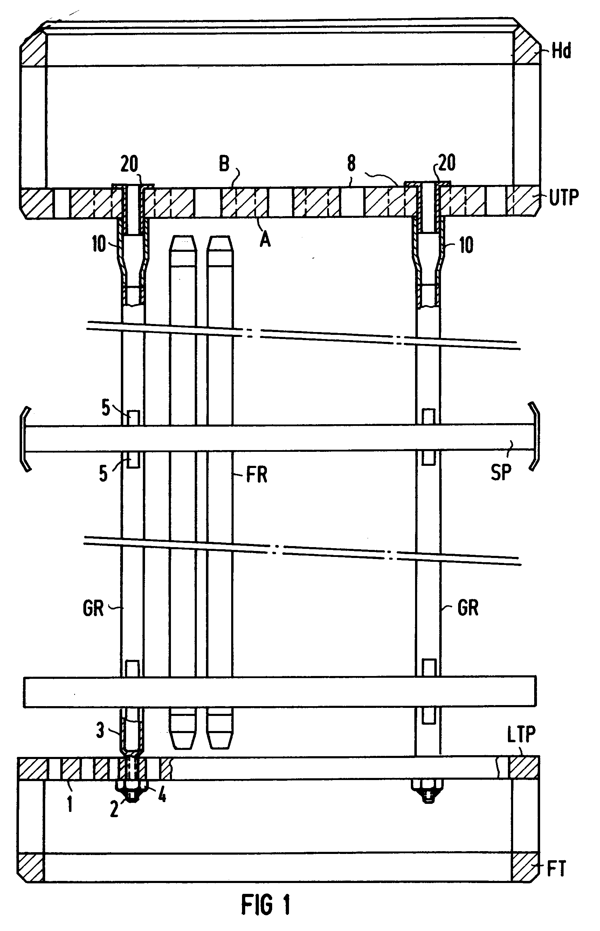

Gemäß Figur 1 trägt der Rahmen eines Fußteils FT die mit Kühlmittel-Eintrittsöffnungen 1 versehene Fußplatte ("lower tie plate" LTP), an der Gewindebolzen 2, die an Verschlußkappen 3 von Steuerstab-Führungsrohren ("guide rods" GR) angeformt sind, mittels Muttern 4 befestigt sind. Über Anschläge 5 sind an den Führungsrohren GR in mehreren axialen Positionen gitterförmige Abstandhalter ("spacer" SP) befestigt, deren Stege Maschen bilden, durch die die Brennstäbe ("fuel rods" FR) geführt sind, um die Stäbe mittels Noppen und/oder Federn an den Abstandhalter-Stegen seitlich abzustützen.

Die oberen Enden der Führungsrohre GR tragen angeschweißte Buchsen 10 mit einem Innengewinde, in das die Außengewinde von Hülsen 20 eingedreht sind. Diese Hülsen 20 sitzen in Haltebohrungen einer Deckplatte ("upper tie plate" UPT), die vom Rahmen eines Kopfteils ("head" HD) gehalten ist und möglichst viele und große Durchlaßöffnungen 8 für das Kühlmittel aufweisen.

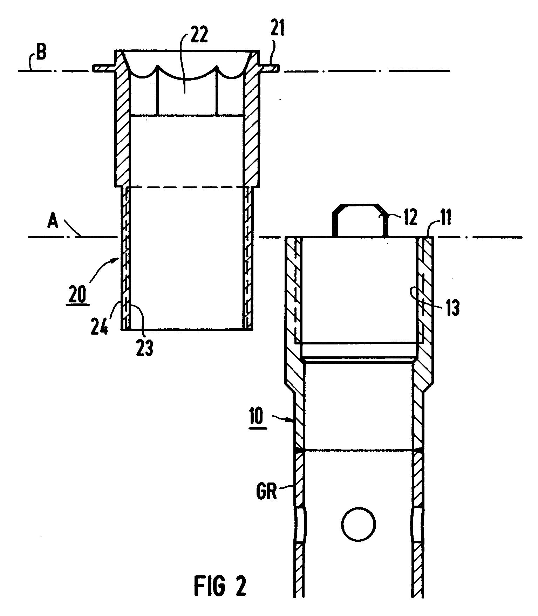

In Figur 2 ist mit A die Ebene angedeutet, in der die Unterseite der Deckplatte UTP liegt, während die Ebene B die Oberseite der Deckplatte andeutet.

Das Führungsrohr GR trägt die angeschweißte Buchse 10, die zylindrisch ist und somit eine ebene Stirnfläche 11 aufweist. Diese Stirnfläche liegt praktisch spielfrei an der Unterseite A an der Deckplatte an. Lediglich an einer Stelle ragt über die Stirnfläche 11 ein Zapfen 12 über die Deckplatten-Unterseite hinaus und in eine (später beschriebene) Nut der Deckplatte hinein.

Die Buchse und das Steuerstab-Führungsrohr sind vorteilhaft aus einer Zirkonium-Legierung gefertigt und derart miteinander verschweißt, daß die Anlagenflächen (Stirnseiten 11) aller Führungsrohrbuchsen eines Brennelementes in der gleichen, zu den Brennstäben möglichst senkrechten Ebene liegen. Diese Fertigung und Ausrichtung der Hüllrohre und Buchsen ist daher von den individuellen Maßen einzelner Deckplatten unabhängig und kann z. B. mittels einer Lehre erfolgen. Bei Reparaturarbeiten können daher die Deckplatten einzelner Brennelemente durchaus vertauscht werden.

Die Hülse 20 weist an ihrer dem Brennstabbündel abgewandten Oberseite einen Flansch 21 auf, der seitlich herausragt und an der Oberseite B der Deckplatte anliegt. Die Innenfläche der Hülse bildet in diesem oberen Teil ebene Angriffsflächen 22, an die ein Drehwerkzeug für die Montage des Brennelementes angreifen kann. Mit diesem Drehwerkzeug wird der nach unten über die Unterfläche A der Deckplatte herausragende Kragen 23 mit seinem Außengewinde 24 in das Innengewinde 13 der Buchse 10 eingeschraubt.

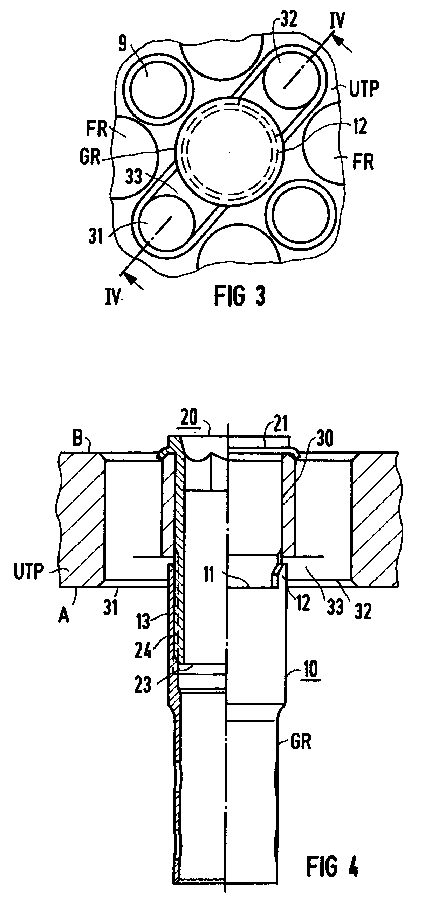

In Figur 3 ist zwischen den Positionen der Brennstäbe FR eine von einem Führungsrohr GR besetzte Position zu erkennen, wobei zwischen diesen Positionen Durchlaßöffnungen 9 in der Deckplatte vorgesehen sind. Die runde Haltebohrung für die ebenfalls runde Hülse 20, die vom Führungsrohr GR in der Aufsicht der Figur 3 verdeckt ist, ist also von Kühlmittelbohrungen umgeben, wobei die beiden Kühlmittelbohrungen 31, 32 zu beiden Seiten der Haltebohrung durch eine Nut 33 verbunden sind. Diese auf der Unterseite der Deckplatte angebrachte Nut dient zur Aufnahme des in Figur 2 dargestellten Zapfens 12, der zwar nicht bis zum Boden der Nut 33 reicht, aber nur ein geringes tangentiales Spiel aufweist. Mit IV-IV ist eine Schnittebene durch die aus austenitischem Stahl angefertigte Deckplatte UTP gezeigt, wobei im entsprechenden Schnittbild der Figur 4 rechts die unaufgeschnittene Seitenansicht der Buchse 10 und der Hülse 20 wiedergegeben ist.

Dabei ist erkennbar, daß der die Deckplatten-Oberseite B übergreifende Flansch 21 nach Montage des Brennelementes so gebogen ist, daß er in ein entsprechendes Halteprofil an der Oberseite B der Deckplatte eingreift. Bei der hier gezeigten, sehr kompakten räumlichen Anordnung greift der Flansch 21 in die der Haltebohrung 30 benachbarten Kühlmittelbohrungen 31, 32 ein.

Zur Montage des Brennelementes wird die Hülse (20) in die Buchse (10) eingeschraubt und mit einem konstanten, vom Zapfen (12) aufgefangenen Drehmoment (z. B. 10 Nm) angezogen. Anschließend wir der Rand des Flansches in die Kühlmittelbohrung gedrückt. Dadurch ist die Hülse gesichert. Zum Demontieren genügt es, diese Drehsicherung durch ein Drehmoment (z. B. 200 Nm) aufzubrechen.

Auf diese Weise entsteht eine sehr kompakte Anordnung, bei der genügend Platz für Kühlmittelbohrungen bleibt, die bis in die Nähe der Haltebohrung 30 reichen können. Gegenüber den eingangs erläuterten Verschraubungen, bei der die Führungsrohr-Buchse mit einem oktogonalen Profil in entsprechende Ausnehmungen an der Deckplatten-Unterseite eingreift, werden ohne einen Verlust der mechanischen Stabilität der Deckplatte etwa 9 cm² an zusätzlicher Durchtrittsfläche für das Kühlmittel geschaffen, wodurch der an der Deckplatte auftretende Druckverlust im Kühlmittelstrom herabgesetzt ist. Dabei liegen alle Führungsrohr-Buchsen mit dem überwiegenden Teil ihrer Stirnfläche an der Deckplatten-Unterseite auf, die im Brennelement auftretenden Kräfte werden daher gleichmäßig auf die gesamten Deckplatte verteilt. Die Deckplatte selbst ist ohne eine individuelle Anpassung zwischen den Hülsen, Buchsen und Haltebohrungen auf eine Montage- und Demontage-freundliche Weise senkrecht zur Längsachse der Brennstäbe ausgerichtet.

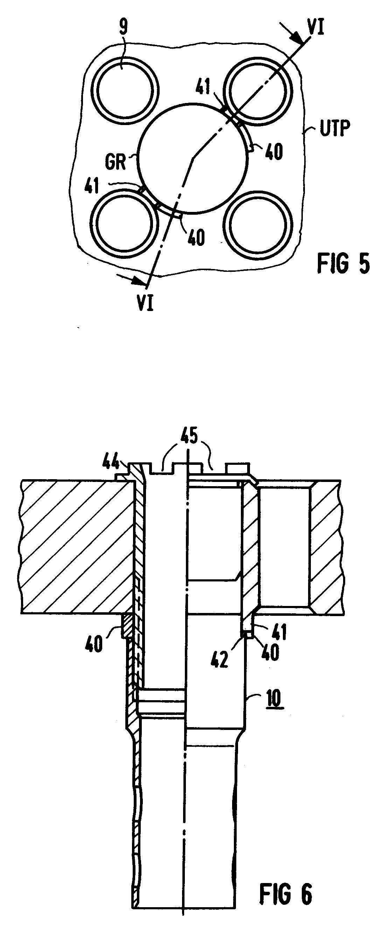

Beim Ausführungsbeispiel der Figur 5 trägt die Buchse des Führungsrohres GR an ihrem Umfang seitliche Vorsprünge 40, die an Anschlagteilen 41, die an der, im übrigen ebenen, Unterseite der Deckplatte aufgesetzt und angeschweißt oder auch angeformt sein können, anschlagen und somit das erforderliche Profil bilden, das die beim Einschrauben von Buchse und Hülse auftretenden Drehmomente aufnimmt.

Der in Figur 6 gezeigte Schnitt längs der Linie VI-VI läßt erkennen, daß die Anschlagteile 41 auch in eine entsprechende Nut 42 der Hülse 10 eingreifen können. Außerdem ist erkennbar, daß der in die Deckplatte übergreifende Flansch 44 Kerben 45 tragen kann, die als Angriffsflächen für ein Drehwerkzeug dienen.

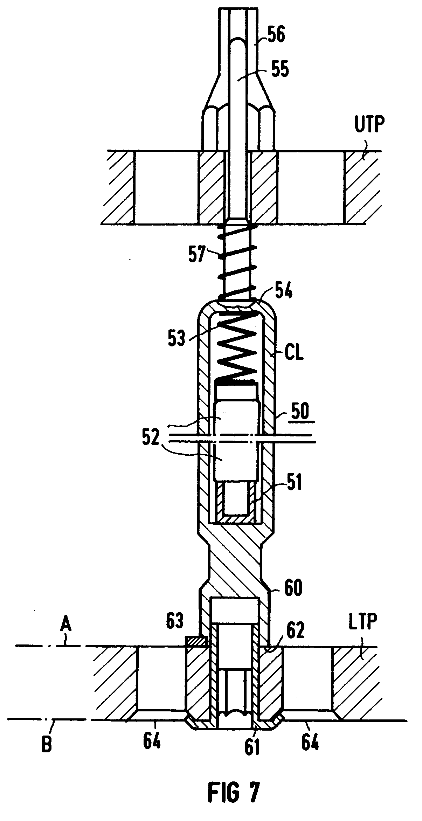

Figur 7 zeigt einen Brennstab 50, der z. B. als Tragstab ausgebildet ist. Er ist an der Deckplatte LTP im Fuß eines Siedewasser-Brennelementes und an der Endplatte UTP am anderen Ende des Brennelementes verschraubt. Das Hüllrohr "Cladding" CL des Brennstabs ist teilweise aufgeschnitten gezeigt und läßt jeweils einen von einem Tragkörper 51 im unteren Stabende und von einer Feder 53 im oberen Stabende erzeugten Sammelraum für gasförmige Spaltprodukte erkennen, zwischen denen eine Säule aus Brennstoff-Pellets 52 angeordnet ist.

Das obere Brennstab-Ende 54 trägt einen durch die Endplatte UTP ragenden Stift 55, auf den ein Anschlag Mutter 56 aufgeschraubt ist; eine Druckfeder 57 drückt die Endplatte gegen den Anschlag.

Das untere Ende des Rohres CL ist durch eine Buchse 60 verlängert, deren Stirnfläche 62 eine an der Innenseite A der Bodenplatte anliegende Auflagefläche bildet. Mit 63 ist ein den Figuren 5 und 6 entsprechendes Profil der Buchse und ein entsprechendes Gegenprofil an der Innenfläche der Deckplatte angedeutet, die eine Drehung der Buchse verhindern. Diese Buchse trägt ein Innengewinde.

Ein Stift 61, der z. B. als eine von der Außenseite des Elementes zugängliche Hülse ausgebildet ist und Angriffsflächen für einen einsetzbaren Sechskant-Schlüssel oder ein anderes Drehwerkzeug enthält, greift durch die Haltebohrung der internen Deckplatte LTP; dieser Stift liegt mit einem Flansch auf der unteren Ebene B der Deckplatte an und besitzt auf dem über die Innenfläche A hinausragenden Teil ein Außengewinde.

Dieser Stift ist mit seinem Außengewinde in das Innengewinde der Buchse 60 eingedreht, bis der Flansch des Stiftes an der unteren Ebene B der Deckplatte und die Stirnfläche der Buchse an der oberen Ebene der Deckplatte anschlägt. Anschließend an diesen Montageschritt wird der Flansch so verformt, daß er in ein Halteprofil an der Deckplatten-Außenseite (z. B. einen der Haltebohrung benachbarten Kühlmitteldurchlaß 64) eingreift.

Eine derartige Verschraubung mit einem an der Bodenplatte befestigten, durchgehend offenen Rohr, wie es im einzelnen in den Figuren 1 bis 6 näher erläutert ist, ist insbesondere vorteilhaft, wenn flüssiges Kühlmittel durch die Bodenplatte und ein Kühlmittelrohr, das als Rückgrat eines die Brennstäbe tragenden Skelettes dient, in den oberen Teil eines Siedewasser-Brennelementes geleitet wird. Der geringe Flächenbedarf der Verschraubung gestattet dabei, über die Bodenplatte verhältnismäßig kleine Kühlmitteldurchlässe, an denen sich im Kühlmittelstrom mitgeführte Fremdkörper ("Debris") fangen, in relativ gleichmäßiger Anordnung zu verteilen, ohne daß ein nennenswerter Druckverlust entsteht.

## Patentansprüche

1. Brennelement eines Druckwasser-Reaktors, mit
a) einer für Kühlmittel durchlässigen Bodenplatte (LTP);
b) einer Deckplatte (UTP) mit einer Oberseite (B), einer praktisch ebenen Unterseite (A) und Kühlmitteldurchlässen (8);
c) einem Bündel nebeneinander liegender Brennstäbe (FR), die sich praktisch von der Bodenplatte bis zur Deckplatte erstrecken; und
d) mehreren Steuerstab-Führungsrohren (GR) mit jeweils einer Buchse (10) am oberen Ende, die mit einer in einer Haltebohrung in der Deckplatte eingesetzten Hülse (20) verschraubt ist,
**dadurch gekennzeichnet,** daß die Buchse (10) eine Stirnfläche (11), die eine ebene, an der Unterseite (A) der Deckplatte anschlagende Anlagefläche bildet, ein in ein Gegenprofil der Deckplatte verdrehungssicher eingreifendes Profil (12) und ein Innengewinde (13) aufweist und daß die Hülse (20) einen die Oberseite (B) der Deckplatte übergreifenden Flansch (21) und einen über die Unterseite (A) hinausragenden Kragen (23) mit einem Außengewinde aufweist und mit dem Außengewinde (24) in das Innengewinde (13) der Buchse (10) geschraubt ist, bis der Flansch (21) an der Oberseite (B) der Deckplatte (UTP) anschlägt. (Figuren 1, 2)

2. Brennelement nach Anspruch 1, **dadurch gekennzeichnet**, daß die Hülse (20) an der Innenfläche ihres dem Brennstab abgewandten Oberteils Angriffsflächen (22) für ein Drehwerkzeug bildet. (Figur 2)

3. Brennelement nach Anspruch 1 oder 2, **dadurch gekennzeichnet,** daß die Hülse (20) und die Haltebohrung (30) zylindrisch und von Kühlmittelbohrungen (31, 32) umgeben sind und daß der die Oberseite (B) der Deckplatte (UTP) übergreifende Flansch (21) in ein Halteprofil der Deckplatte, vorzugsweise mindestens eine der benachbarten Kühlmittelbohrungen (31, 32) eingreift. (Figur 4)

4. Brennelement nach einem der Ansprüche 1 bis 3, **dadurch gekennzeichnet**, daß die Buchse (10) zylindrisch ist und das Profil von wenigstens einem nach oben ragenden Zapfen (12) gebildet wird, der in eine Nut (33) an der Unterseite (A) der Deckplatte eingreift.

5. Brennelement nach Anspruch 4, **dadurch gekennzeichnet,** daß die Nut (33) zwei zu beiden Seiten der Haltebohrung (30) angeordnete Kühlmittelbohrungen (31, 32) verbindet. (Figuren 3, 4)

6. Brennelement nach einem der Ansprüche 1 bis 5, **dadurch gekennzeichnet**, daß die Buchse und das Führungsrohr aus einer Zirkoniumlegierung bestehen und miteinander derart verschweißt sind, daß die Anlageflächen (11) der Buchsen aller Führungsrohre eines Brennelementes in einer zu den Brennstäben möglichst senkrechten Ebene liegen.

7. Brennelement nach einem der Ansprüche 1 bis 6, **dadurch gekennzeichnet,** daß die Deckplatte aus austenitischem Stahl besteht.

8. Brennelement eines Leichtwasser-Reaktors, mit
a) einer für Kühlmittel durchlässigen Endplatte (UTP) am einen Ende;
b) einer Deckplatte (LTP) am anderen Ende, mit einer nach außen zeigenden Außenseite (B), einer zum Brennelement-Inneren zeigenden Innenseite (A), Kühlmittel-Durchlässen und wenigstens einer Haltebohrung;
c) einem Bündel nebeneinanderliegender Rohre, wobei die Mehrzahl dieser Rohre (50) Brennstoff enthält; und
d) mindestens einer das Ende eines Rohres verlängernden, an der Deckplatte (LTP) gehaltenen Buchse (60),
**dadurch gekennzeichnet,** daß
e) die Buchse (60) eine Stirnfläche (62), die eine an der Innenseite (A) der Deckplatte (LTP) liegende Anlagefläche bildet, ein bei einer Drehung der Buchse an ein Gegenprofil (63) an der Deckplatte anschlagendes Profil trägt und ein Innengewinde aufweist;
f) daß ein durch die Haltebohrung greifender Stift einen auf der Außenseite der Deckplatte anliegenden Flansch und ein über die Innenseite der Deckplatte hinausragendes Ende mit einem Außengewinde trägt, das in das Innengewinde des Stiftes eingeschraubt ist, bis der Flansch an der Außenseite der Deckplatte und die Stirnfläche der Hülse an der Innenseite der Deckplatte anschlägt.

9. Brennelement nach Anspruch 8, **dadurch gekennzeichnet**, daß der Flansch Angriffsflächen für ein Drehwerkzeug trägt.

10. Brennelement nach Anspruch 8 oder 9, **dadurch gekennzeichnet,** daß der Stift als Hülse ausgebildet ist.

11. Brennelement nach Anspruch 8 bis 10, **dadurch gekennzeichnet**, daß der Flansch in ein Halteprofil, vorzugsweise ein der Haltebohrung benachbarter Kühlmittel-Durchlaß, eingreift.

## Claims

1. A fuel assembly of a pressurised water reactor, comprising
a) a base plate (LTP) permeable to coolant;
b) a cover plate (UTP) having an upper surface (B), having a practically flat lower surface (A), and having coolant openings (8);
c) a bundle of fuel rods (FR) disposed next to one another and extending substantially from the base plate to the cover plate; and
d) a plurality of control rod guide tubes (GR) each having a bush (10) on the upper end which is screwed to a sleeve (20) inserted into a retaining bore in the cover plate,
characterised in that
the bush (10) has an end surface (11) forming a flat bearing surface meeting the lower surface (A) of the cover plate, a profile (12) engaging a counterpart profile of the cover plate in a manner secure against twisting and an internal thread (13); and in that the sleeve (20) has a flange (21) fitting over the upper surface (B) of the cover plate, and a collar (23) protruding beyond the lower surface (A), the collar having an external thread and being screwed with the external thread (24) into the internal thread (13) of the bush (10) until the flange (21) meets the upper surface (B) of the cover plate (UTP). (Figures 1, 2)

2. A fuel assembly according to claim 1, characterised in that the sleeve (20) forms on the inner surface of its upper part facing away from the fuel rod engagement surfaces (22) for a turning tool. (Figure 2)

3. A fuel assembly according to claim 1 or claim 2, characterised in that the sleeve (20) and the retaining bore (30) are cylindrical and are surrounded by coolant bores (31, 32) and in that the flange (21) fitting over the upper surface (B) of the cover plate (UTP) engages a retaining profile of the cover plate, preferably at least one of the adjacent coolant bores (31, 32). (Figure 4)

4. A fuel assembly according to any one of claims 1 to 3, characterised in that the bush (10) is cylindrical and the profile is formed by at least one upwardly protruding protrusion (12) which engages a groove (33) formed on the lower surface (A) of the cover plate.

5. A fuel assembly according to claim 4, characterised in that the groove (33) joins two of the coolant bores (31, 32) disposed one on either side of the retaining bore (30).

6. A fuel assembly according to any one of claims 1 to 5, characterised in that the bush and the guide tube are formed of a zirconium alloy and are welded together so that the bearing surfaces (11) of the bushes of all of the guide tubes of a fuel assembly are disposed in a plane which is as perpendicular as possible to the fuel rods.

7. A fuel assembly according to any one of claims 1 to 6, characterised in that the cover plate is formed of austenitic steel.

8. A fuel assembly for a light water reactor, comprising
a) at one end an end plate (UTP) permeable to coolant;
b) at the other end a cover plate (LTP) having an outwardly pointing outer side (B), an inner side (A) pointing to the interior of the fuel assembly, coolant openings and at least one retaining bore;
c) a bundle of tubes disposed next to one another, the majority of these tubes (50) containing fuel; and
d) at least one bush (60) extending the end of a tube and retained on the cover plate (LTP),
characterised in that
e) the bush (60) has an end surface (62) which forms a bearing surface on the inner side (A) of the cover plate (LTP), carries a profile which, when the bush is rotated, meets a counterprofile (63) on the cover plate, and has an internal thread;
f) in that a pin reaching through the retaining bore carries a flange bearing on the outer side of the cover plate and an end protruding beyond the inner side of the cover plate and having an external thread which is screwed into the internal thread of the pin until the flange meets the outer side of the cover plate and the end surface of the sleeve meets the inner side of the cover plate.

9. A fuel assembly according to claim 8, characterised in that the flange carries engagement surfaces for a turning tool.

10. A fuel assembly according to claim 8 or claim 9, characterised in that the pin is in the form of a sleeve.

11. A fuel assembly according to any of claims 8 to 10, characterised in that the flange engages a retaining profile, preferably a coolant opening adjacent to the retaining bore.

## Revendications

1. Assemblage combustible d'un réacteur à eau sous pression, comportant
a) un embout inférieur (LTP) laissant passer un fluide de refroidissement;
b) un embout supérieur (UTP) comportant une face supérieure (B), une face inférieure pratiquement plane (A) et des passages (8) pour le fluide de refroidissement;
c) une grappe de crayons combustibles (FR) disposés les uns à côté des autres et qui s'étendent pratiquement de l'embout inférieur à l'embout supérieur ; et
d) plusieurs tubes-guides (GR) des crayons combustibles, comportant chacun, à son extrémité supérieure, une gaine (10), qui est vissé à une douille (20) insérée dans un trou de retenue ménagé dans l'embout supérieur,
caractérisé par le fait que la gaine (10) comprend une surface frontale (11), qui forme une surface d'application plane, qui est en butée contre la face inférieure (A) de l'embout supérieur, un profilé (12), qui s'engage avec blocage en rotation dans un profilé antagoniste de l'embout supérieur de couverture, et un taraudage (13), et que la douille (20) comprend une bride (21), qui s'engage par-dessus la face supérieure (B) de l'embout supérieur et comprend un collet (23) qui fait saillie sur la face inférieure (A) et porte un filetage extérieur et est vissé au moyen du filetage extérieur (24) dans le taraudage (13) de la gaine (10), jusqu'à ce que la bride (21) bute contre la face supérieure (B) de l'embout supérieur (UTP) (figures 1, 2).

2. Assemblage combustible suivant la revendication 1, caractérisé par le fait que la douille (20) forme, sur la surface intérieure de sa partie supérieure éloignée du crayon combustible, des surfaces de saisie (22) pour un outil rotatif. (Figure 2).

3. Assemblage combustible suivant la revendication 1 ou 2, caractérisé par le fait que la douille (20) et le perçage de retenue (30) sont cylindriques et sont entourés par des perçages (31,32) prévus pour le fluide de refroidissement, et que la bride (21), qui s'engage pardessus la face supérieure (B) de l'embout supérieur (UTP), s'engage dans un profilé de retenue de l'embout supérieur, de préférence au moins l'un des perçages voisins (31,32) pour le fluide de refroidissement. (Figure 4).

4. Assemblage combustible suivant l'une des revendications 1 à 3, caractérisé par le fait que la gaine (10) est cylindrique et que le profilé est formé par au moins un téton (12) qui fait saillie vers le haut et qui s'engage dans une rainure (33) ménagée dans la face inférieure (A) de l'embout supérieur.

5. Assemblage combustible suivant la revendication 4, caractérisé par le fait que la rainure (33) relie deux perçages (31,32) pour le fluide de refroidissement, qui sont disposés des deux côtés du perçage de retenue (30). (Figures 3, 4).

6. Assemblage combustible suivant l'une des revendications 1 à 5, caractérisé par le fait que la gaine et le tube-guide sont en un alliage de zirconium et sont soudés l'un à l'autre de telle sorte que les surfaces d'application (11) des gaines de tous les tubes-guides d'un assemblage combustible sont situées dans un plan aussi perpendiculaire que possible aux crayons combustible.

7. Assemblage combustible suivant l'une des revendications 1 à 6, caractérisé par le fait que l'embout supérieur est en acier austénitique.

8. Assemblage combustible d'un réacteur à eau légère comportant :
a) à une extrémité, un embout (UTP) laissant passer un fluide de refroidissement;
b) à l'autre extrémité, un embout supérieur (LTP) comportant une face extérieure (B) tournée vers l'extérieur, une face extérieure (A) tournée vers l'intérieur de l'assemblage combustible, des passages pour fluide de refroidissement et au moins un perçage de retenue;
c) une grappe de tubes disposés les uns à côté des autres, cette multiplicité de tubes (50) contenant un matériau combustible; et
d) au moins une gaine (60) qui prolonge l'extrémité d'un tube et est fixée à l'embout supérieur (LTP); caractérisé par le fait que
e) la gaine (60) comprend une surface frontale (62), qui forme une surface d'application située sur la face intérieure (A) de l'embout supérieur (LTP), porte un profilé qui s'applique, lors d'une rotation de la gaine, contre un profilé antagoniste (63) situé sur l'embout supérieur, et est munie d'un taraudage;
f) qu'une tige, qui s'engage dans le perçage de retenue, porte une bride s'appliquant sur la face extérieure de l'embout supérieur et une extrémité, qui fait saillie au-delà la face intérieure de l'embout supérieur et est munie d'un filetage extérieur, qui est vissé dans le taraudage de la tige, jusqu'à ce que la bride bute contre la face extérieure de l'embout supérieur et que la face frontale de la douille s'applique contre la face intérieure de l'embout supérieur.

9. Assemblage combustible suivant la revendication 8, caractérisé par le fait que la bride porte des surfaces d'application pour un outil rotatif.

10. Assemblage combustible suivant la revendication 8 ou 9, caractérisé par le fait que la tige est agencée sous la forme d'une douille.

11. Assemblage combustible suivant les revendications 8 à 10, caractérisé par le fait que la bride s'engage dans un profilé de retenue, de préférence un passage pour le fluide de refroidissement, qui est voisin du perçage de retenue.
